# EUROPEAN PATENT SPECIFICATION

(11) **EP 3 248 399 B1**
(45) Date of publication and mention of the grant of the patent: **01.01.2020**
(21) Application number: 15701503.3
(22) Date of filing: 20.01.2015
(51) Int. Cl.: H04L 29/06, H04W 4/50, H04W 8/26, H04L 29/12

(54) **METHOD, APPARATUS AND COMPUTER PROGRAM PRODUCT FOR PROVISIONING MULTIPLE USER IDENTITIES IN AN IP MULTIMEDIA SUBSYSTEM**
VERFAHREN, VORRICHTUNG UND COMPUTERPROGRAMMPRODUKT ZUR BEREITSTELLUNG MEHRERER BENUTZERIDENTITÄTEN IN EINEM IP-MULTIMEDIA-SUBSYSTEM
PROCÉDÉ, APPAREIL ET PRODUIT-PROGRAMME INFORMATIQUE PERMETTANT DE FOURNIR DE MULTIPLES IDENTITÉS D'UTILISATEUR DANS UN SOUS-SYSTÈME MULTIMÉDIA IP

(43) Date of publication of application: 29.11.2017
(73) Proprietor: Nokia Solutions and Networks Oy, 02610 Espoo (FI)
(72) Inventor: MILINSKI, Alexander, 81371 München (DE); SHEN, Jiadong, 81379 München (DE)
(74) Representative: Nokia EPO representatives
(86) International application number: PCT/EP2015/050961
(87) International publication number: WO 2016/116135

(56) References cited:
- US-A1- 2011 194 459
- "3rd Generation Partnership Project; Technical Specification Group Core Network and Terminals; IP Multimedia (IM) Subsystem Cx and Dx interfaces; Signalling flows and message contents (Release 12)", 3GPP STANDARD; 3GPP TS 29.228, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V12.4.0, 30 December 2014 (2014-12-30), pages 1-75, XP050927449, [retrieved on 2014-12-30]
- "3rd Generation Partnership Project; Technical Specification Group Core Network and Terminals; Numbering, addressing and identification (Release 12)", 3GPP DRAFT; 23003-C50, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, [Online] 29 December 2014 (2014-12-29), XP050906739, Retrieved from the Internet: URL:http://www.3gpp.org/ftp/Specs/2014-12/ Rel-12/23_series/> [retrieved on 2014-12-29]

## Description

### Field of the Invention

The present invention relates to IMS. Specifically, the present invention relates to methods, apparatuses, system and computer program product for multiple devices sharing a user identity for IMS services, in particular, when using LTE and other types of access.

### Background of the Invention

### Abbreviations

- 3GPP: 3rd Generation Partnership Project
- CSCF: Call Session Control Function
- GSM: Globe System for Mobile communication
- IMPI: IP Multimedia Private Identity
- IMPU: IP Multimedia Public Identity
- IMS: IP Multimedia Subsystem
- IP: Internet Protocol
- I/S-CSCF: Interrogating/Serving- Call Session Control Function
- LTE: Long Term Evolution
- NAI: Network Access Identifier
- SIM: Subscriber Identification Module
- SIP: Session Initiation Protocol
- URI: Uniform Resource Identifier
- WebRTC: Web Real-Time Communication
- WIC: Web Real-Time Communication IMS Client
- WWSF: Web Real-Time Communication Web Server Function

The IP Multimedia Subsystem is an architectural framework for delivering IP multimedia services. It was originally designed by the wireless standards body 3GPP, as a part of the vision for evolving mobile networks beyond GSM.

The IP multimedia subsystem is a collection of different functions, linked by standardized interfaces, form one IMS administrative network. A function is not a node (hardware box): An implementer is free to combine two functions in one node, or to split a single function into two or more nodes. Each node can also be present multiple times in a single network, for dimensioning, load balancing or organizational issues.

The user can connect to IMS in various ways, most of which use the standard IP. IMS terminals (such as mobile phones, personal digital assistants (PDAs) and computers) can register directly on IMS, even when they are roaming in another network or country (the visited network). The only requirement is that they can use IP and run SIP user agents. Fixed access (e.g., Digital Subscriber Line (DSL), cable modems, Ethernet), mobile access (e.g. W-CDMA, CDMA2000, GSM, GPRS) and wireless access (e.g., WLAN, WiMAX) are all supported. Other phone systems like plain old telephone service (POTS-the old analogue telephones), H.323 and non IMS-compatible systems, are supported through gateways.

The Home Subscriber Server (HSS), or User Profile Server Function (UPSF), is a master user database that supports the IMS network entities that actually handle calls. It contains the subscription-related information (subscriber profiles), performs authentication and authorization of the user, and can provide information about the subscriber's location and IP information. It is similar to the GSM Home Location Register (HLR) and Authentication Centre (AuC).

Various identities may be associated with IMS, for example, IMPI and IMPU. IMPU may take the form of either a SIP URI or a telephone URI format, for example, sip: john.doe@example.com or tel: +1-555-123-4567. IMPI may take the form of NAI as defined in RFC2486, for example IMPI: john.doe@example.com.

The IMPI is a unique permanently allocated global identity assigned by the home network operator, and is used, for example, for registration, authorization, administration, and accounting purposes. Every IMS subscription may have multiple IMPIs, but each IMPI must be provisioned as a distinct IMPI individually, e.g. jone.doe.mobile@example.com orjone.doe.fixed@example.com. The distinct IMPI can only be used by one IMS device at a time.

An IMPU is used by any user for requesting communications to other users (e.g. this might be included on a business card). There can be multiple IMPU per IMPI. The IMPU can also be shared with another phone, so that both can be reached with the same identity (for example, a single phone-number for an entire family).

It has been a general trend that one user may hold multiple devices such as a mobile phone, tablets or other WIFI devices (e.g. smart phone type of devices but without cellular access, iPod touch). The mobile phone is usually considered as the primary device; all others devices are considered secondary devices. The IMS supports sharing a public identity across devices from the beginning (3GPP Rel-5). However, each device must be configured in the network (e.g. HSS) with a dedicated private user identity (IMPI) and its associated credentials. According to 3GPP, there is only one kind of IMPI: individually provisioned IMPI, which may be called distinct IMPI for each device of a subscriber.

Another disadvantage is that the IMPI plays an important role and is at the heart of the whole IMS; the impact on implementations when adapting the concept cannot even be estimated. For mobile phones, the concept of an IMPI (in relationship with IMSI) ensures that a user can keep his phone number after the phone (with "SIM" card) was lost or stolen.

US 2011/0194459 A1 discusses the issues of registering more than one IMPI and more than one contact address within a single registration procedure in an IMS network. It discloses a method and a HSS to allow the implicit registration of more than one IMPI, or the implicit registration of more than one contact address, or both, upon explicit registration of a subscriber with a given IMPI/IMPU pair and a given contact address. In particular, it discloses a method including the steps of configuring subscriber data for the subscriber at the HSS with at least one implicit registration set selected from: a set of IMPI's asso-ciated with a given IMPI or with a given IMPU, and a set of contact addresses per IMPI basis; downloading from the HSS towards the S-CSCF the implicit registration set; and building up a corresponding data model therein.

### Summary of the Invention

The present invention and its embodiments seek to address one or more of the above-described issues.

The present invention is defined by the appended independent claims.

According to one modification of the invention, the pre-defined range of private identity may be denoted by an expression, a wild-carded private identity or a template.

According to further development of the invention, the method further comprises associating the temporary private identity and the temporary profile with the first public identity.

According to another aspect of the invention, there is provided a first apparatus comprising a transceiver configured to communicate with at least another apparatus, a memory configured to store computer program code, and a processor configured to cause the apparatus to perform: receiving provisioning from a second apparatus, wherein said provisioning comprising at least a public identity and a pre-defined range of private identity associated with the public identity, receiving a request comprising a first public identity and its associated private identity from a third apparatus, determining the first public identity already exists in the apparatus, determining the received private identity is not identical to any private identity already provisioned in the apparatus, determining the received private identity is not identical to any private identity in a temporary profile, determining the received private identity is within a pre-defined range of private identity associated with the first public identity, creating a temporary private identity identical to the received private identity and a temporary profile for the received private identity.

According to further improvement of the invention, the pre-defined range of private identity may be denoted by an expression, a wild-carded private identity or a template.

According to further modification of the invention, the processor of said apparatus is further configured to cause the apparatus to associate the temporary private identity and the temporary profile with the first public identity.

According to a third aspect of the invention, there is provided a computer program product comprising computer-executable computer program code which, when the computer program code is executed on a computer, is configured to cause the computer to carry out the methods as mentioned above.

According to another modification the invention, the computer program product comprises a computer-readable medium on which the computer-executable computer program code is stored, and/or wherein the program is directly loadable into an internal memory of a processor.

According to a fourth aspect of the invention, there is provided a first apparatus comprising a transceiving means for communicating with at least another apparatus, a memory for storing computer program code, and processing means for causing the apparatus to perform: receiving provisioning from a second apparatus, wherein said provisioning comprising at least a public identity and a pre-defined range of private identity associated with the public identity, receiving a request comprising a first public identity and its associated private identity from a third apparatus, determining the first public identity already exists in the apparatus, determining the received private identity is not identical to any private identity already provisioned in the apparatus, determining the received private identity is not identical to any private identity in a temporary profile, determining the received private identity is within a pre-defined range of private identity associated with the first public identity, creating a temporary private identity identical to the received private identity and a temporary profile for the received private identity.

### Brief Description of the Drawings

Exemplary embodiments of the invention are described below, by way of example only, with reference to the following numbered drawings.
Figure 1 gives an exemplary overview of network architecture according to one aspect of invention.
Figure 2 illustrates a method according to certain embodiment of the invention.
Figure 3 depicts a schematic block diagram illustrating an apparatus according to certain embodiment of the invention.

### Description of the Embodiments of the Invention

Herein below, certain embodiments of the present invention are described in detail with reference to the accompanying drawings, wherein the features of the embodiments can be freely combined with each other unless otherwise described. However, it is to be expressly understood that the description of certain embodiments is given for by way of example only, and that it is by no way intended to be understood as limiting the invention to the disclosed details.

As a part of the solution to overcome afore-mentioned disadvantages, a private user identity with a pre-defined range may be provisioned in the network (e.g. in HSS). According to one embodiment of the invention, the pre-defined range of the IMPI may be defined by a wild-carded IMPI or a template. A user may have one or more shared IMPUs, which may be shared among as many devices as the user wants. When registering to an IMS network, each device must use its own explicit identity within the pre-defined IMPI range. Each of the devices registers independently with the combination of the IMPU and one dedicated IMPI. There is no implicit registration across devices. And each instance of the wildcarded IMPI can only be used by one device at a time.

As an exemplary example of the invention, the pre-defined range of IMPI is denoted by a wild-carded private identity. For instance, sign "*" representing a group of IMPIs is provisioned in HSS. Assuming that the IMPU SIP:+491751804512@example.com is associated with a wild-carded private identity 12345678*@example.com, then, for example, three different UEs could register the IMPU SIP:
+491751804512@example.com with IMPIs 123456780@example.com, 123456789@example.com and 123456784@example.com. The interactions between HSS and I/S-CSCF would be exactly the same as if IMPIs 123456780@example.com, 123456789@example.com and 123456784@example.com had been provisioned in the HSS explicitly.

According to another embodiment of the invention, the pre-defined range of IMPI may be provided by an expression such as 12345678[4-6]@example.com or 12345678[4, 6]@example.com, which indicates that IMPIs 123456784@example.com, 123456785@example.com and 123456786@example.com may be used in registration by UEs or other devices in conjunction with the IMPU SIP:+491751804512@example.com.

In fact, any expression/logic/template and/or their combination that may describe a range of intended IMPI may be used in provisioning the network. As previously mentioned, instead of provisioning each dedicated IMPI, the invention makes it possible to provision multiple IMPIs with only one expression. Moreover, the expression only hints the maximum number of IMPI that is associated with IMPU, i.e. the maximum number of IMPI could be used by a user, without provisioning an explicit amount of IMPI for the associated IMPU, no matter if the user actually use them or not.

In the above example, when the HSS or an equivalent network element receives a request comprising the IMPI: 123456780@example.com, it may create a temporary IMPI identical to the received IMPI. The created IMPI is within the pre-defined range as it matches the wild-carded IMPI 12345678*@example.com. So it is an instance of the wild-carded IMPI. And when this IMPI is registered in HSS, it will have its own dynamical state, which may be different from other instance of the same wild-carded IMPI. Therefore the HSS may automatically provision a "temporary" IMPI and a temporary profile of IMPI for this instance in order to maintain all dynamical states. A profile may contain attributes associated to an IMS instance. They may be statically provisioned with the wild-carded IMPI template and copied to the created temporary IMPI instance, e.g. authentication method and related credential. They may also be dynamic information e.g. registration state, IMS restoration-info, etc.

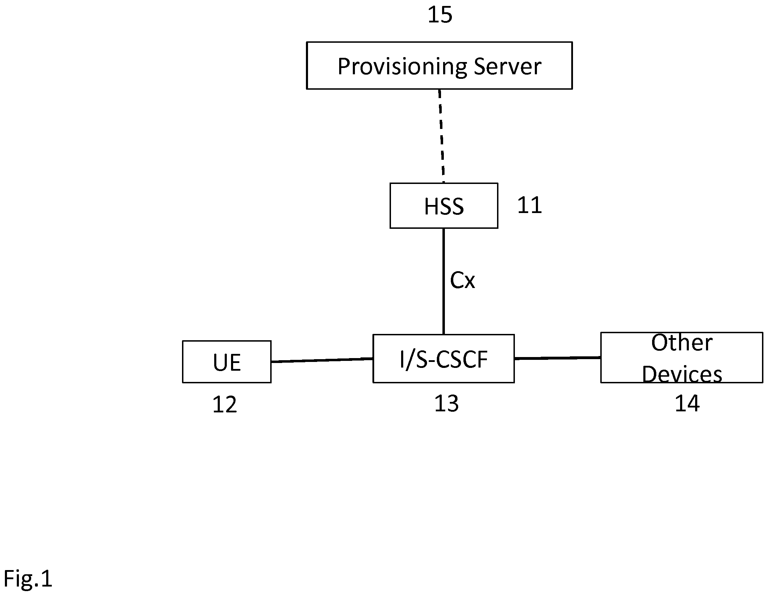

Figure.1 gives an overview of the network architecture.

Before a user can use an IMS service, IMPUs and IMPIs for the user should be provisioned in the HSS 11 by a provisioning server 15. According to one embodiment of the invention, a wild-carded IMPI (or an IMPI template) associated with one or more IMPU or IMPU template is provisioned in the HSS 11. Alternatively, a pre-defined range of IMPI associated with an IMPU may also be provisioned in HSS 11. UE 12 of the user must be provisioned with an IMPU and an IMPI by the provisioning server 15. The provisioned IMPI is supposed to be within the pre-defined IMPI range associated with the IMPU.

The HSS may also use a profile which is additionally configured or provisioned for each class IMPI as a template. During the registration process the HSS creates a normal IMPI for the requested IMPU/IMPI pair (based on the IMPI template). The HSS may control the number of IMPIs generated from certain template, if needed. During de-registration of an IMPU/IMPI pair, the related IMPI may be deleted and becomes free for reuse. Only if no IMPI is registered with an IMPU which was created from an IMPU template, the profile related to that IMPU may be deleted and becomes free for reuse. Such an IMPI template may be associated to a provisioned IMPU or a provisioned/configured IMPU template.

There may be multiple contacts (i.e. multiple WICs or browser instances) associated with the same allocated IMPU. This happens if the same user registers from two or more different WICs with a WWSF using the same credentials.

The WWSF is located either within the operator network or within a third party network and is the web server contacted by the user agent (generally after clicking on a link or entering a URL into the browser). The provisioning server 15 may be a WWSF. A WIC is an application run in a UE using the WebRTC extensions specified in WebRTC 1.0 and providing access to IMS by interoperating with the WebRTC IMS.

As depicted in Fig.1, other devices 14 belonging to the same user may be connected to the network via I/S-CSCF 13. They should be provisioned with an IMPU and the associated IMPI respectively.

In order to be able to use the services provided by the IMS, each user terminal 12/14 needs to register at the I/S-CSCF 13 with the combination of IMPU and IMPI. The I/S-CSCF 13 may interact with the HSS 11 in the registration process.

For the I-/S-CSCF 13 and at the Cx interface, any IMPI within the pre-defined range is handled as if the identity had been provisioned in the HSS already. The advantage is that only one wild-carded IMPI or one expression of IMPI needs to be provisioned in the network but can be shared by many devices.

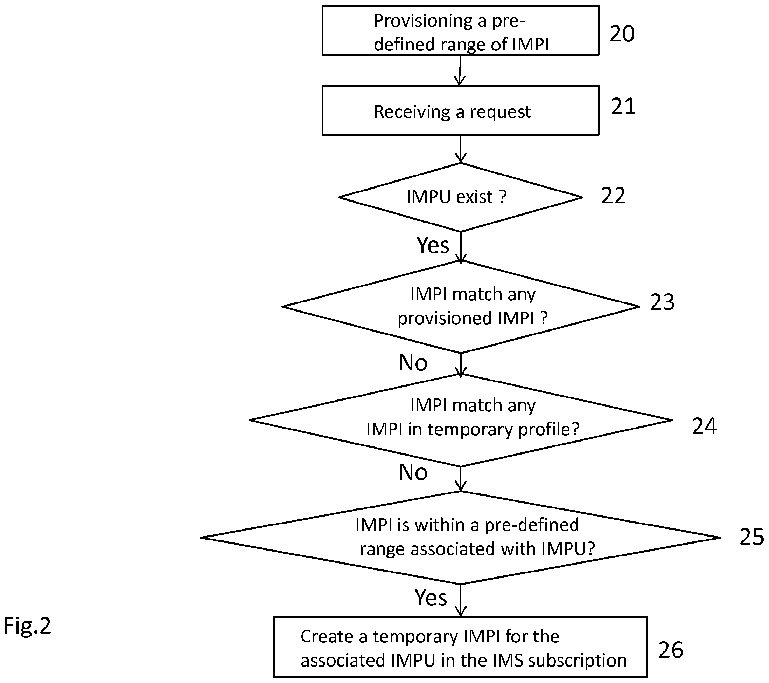

Figure 2 illustrates a method according to certain embodiment. The method may be relevant to, but not limited to, an initial registration procedure and may be performed by a network element such as a HSS 11. At 20, a pre-defined range of IMPI associated with an IMPU may be provisioned to the network element beforehand by the provisioning server 11. In certain embodiments, there may be multiple pairs of an IMPU and its associated range of IMPI provisioned in the network element. At 21, a message from another network element (e.g. I/S-CSCF 13) may be received by the network element. The message may be a user authentication request and may comprise an IMPI and its associated IMPU. The received IMPI is supposed to be within the pre-defined range (e.g. an IMPI template) provisioned in the network element. The method further comprises, at 22, determining if the received IMPU already exists in the database/memory of the network element. If an IMPU or IMPU template matching the IMPU is provisioned in the network element, then the IMPU exists.

A temporary IMPU may be generated from an IMPU template, with which the IMPI template is associated. In this case the temporary IMPU is also associated with the IMPI template.

If YES, the method also comprises, at 23, checking if the received IMPI matches any IMPI already provisioned in the network element. If YES, it corresponds to a user that already exists in the network element. The request is handled with the user profile of this existing user.

If NO, the method will continue at 24 to check if the received IMPI matches any IMPI in any temporary profile created by the network element.

If YES, no new temporary profile for this IMPI will be created by the network element, rather the status of the existing temporary profile for the IMPI may be updated accordingly if necessary.

If NO, the method further comprises determining if the received IMPI is within the pre-defined IMPI range (e.g. an IMPI template) associated with the received IMPU at 25. If YES, the method comprises creating a temporary IMPI identical to the received IMPI for the associated IMPU and also a temporary profile for the IMPI at step 26. Generally speaking, when receiving the IMS identities (e.g. same IMPU, different IMPI), the HSS may have related profile templates available and create a normal user profile for the requested pair of IMPU/IMPI. The I/S-CSCF 13 may store the relation between the new contact address and the pair of IMPU/IMPI. Normal IMS registration may start afterwards.

The temporary IMPI and the temporary profile for the IMPI may be deleted by the HSS when the IMPI is de-registered. During de-registration of an IMPU/IMPI pair, the created IMPI is deleted in the HSS. During de-registration of the last IMPI of an IMPU, the created user profile is deleted in the HSS.

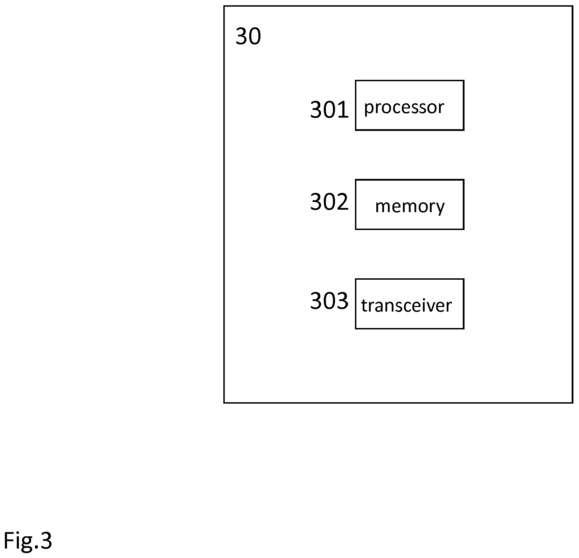

Figure 3 illustrates an apparatuses according to certain embodiments of the invention. In one embodiment, the apparatus may be a HSS 30. The apparatus may comprise at least one processor (or processing means), indicated as 301. At least one memory may be provided in the device, and indicated as 302. The memory may include computer program instructions or computer code contained therein. The processors 301 and memory 302 or a subset thereof, can be configured to provide means corresponding to the various blocks of Figure 2. The processor (or processing means) may be embodied by any computational or data processing device, such as a central processing unit (CPU), application specific integrated circuit (ASIC), or comparable device. The processor can be implemented as a single controller, or a plurality of controllers or processors.

As shown in Figure 3, a transceiver (or transceiving means) 303 may be provided. The transceiver 303 may be a transmitter, a receiver, or both a transmitter and a receiver, or a unit or device that is configured both for transmission and reception.

Memory 302 may be any suitable storage device, such as a non-transitory computer-readable medium. In one embodiment of the invention, the memory 302 may be in the form of a database. A hard disk drive (HDD), random access memory (RAM), flash memory, or other suitable memory can be used. The memory may be combined on a single integrated circuit as the processor, or may be separate from the one or more processors. Furthermore, the computer program instructions stored in the memory and which may be processed by the processors can be any suitable form of computer program code, for example, a compiled or interpreted computer program written in any suitable programming language.

The memory and the computer program instructions can be configured, with the processor (or processing means) for the particular device, to cause a hardware apparatus such as a HSS, to perform any of the processes described herein (for example, Figure 2). Therefore, in certain embodiments, a non-transitory computer-readable medium can be encoded with computer instructions that, when executed in hardware, perform a process such as one of the processes described herein. Alternatively, certain embodiments of the invention can be performed entirely in hardware. Furthermore, although Figure 3 illustrates network element such as a HSS, embodiments of the invention may be applicable to other configurations, and configurations involving additional elements. For example, not shown, additional network element may be present, and additional core/radio network elements may be present.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those skilled in the art that certain modifications, variations, and alternative constructions would be apparent, while remaining within the scope of the invention. In order to determine the metes and bounds of the invention, therefore, reference should be made to the appended claims.

For the purpose of the present invention as described above, it should be noted that
- method steps likely to be implemented as software code portions and being run using a processor at one of the server entities are software code independent and can be specified using any known or future developed programming language;
- method steps and/or devices likely to be implemented as hardware components at one of the server entities are hardware independent and can be implemented using any known or future developed hardware technology or any hybrids of these, such as MOS, CMOS, BiCMOS, ECL, TTL, etc, using for example ASIC components or DSP components, as an example;
- generally, any method step is suitable to be implemented as software or by hardware without changing the idea of the present invention;
- devices can be implemented as individual devices, but this does not exclude that they are implemented in a distributed fashion throughout the system, as long as the functionality of the device is preserved.

It is to be understood that the above description is illustrative of the invention and is not to be construed as limiting the invention. Various modifications, applications and/or combination of the embodiments may occur to those skilled in the art without departing from the scope of the invention as defined by the appended claims.

## Claims

1. A method for a home subscriber server (11, 30) comprising
receiving provisioning from a provisioning server (15), wherein said provisioning comprising at least an internet protocol multimedia public identity and a pre-defined range of internet protocol multimedia private identity associated with the internet protocol multimedia public identity, wherein an explicit amount of the internet protocol multimedia private identity within the pre-defined range is not provisioned, receiving a request comprising a first internet protocol multimedia public identity and its associated internet protocol multimedia private identity from an interrogating/serving-call session control function (13),
determining the first internet protocol multimedia public identity already exists in the home subscriber server (11, 30),
determining the received internet protocol multimedia private identity is not identical to any internet protocol multimedia private identity already provisioned and corresponding to a user that already exists in the home subscriber server (11, 30),
determining the received internet protocol multimedia private identity is not identical to any internet protocol multimedia private identity in a temporary profile, determining the received internet protocol multimedia private identity is within a pre-defined range of internet protocol multimedia private identity associated with the first internet protocol multimedia public identity,
creating a temporary internet protocol multimedia private identity identical to the received internet protocol multimedia private identity and a temporary profile for the received internet protocol multimedia private identity.

2. The method according to claim 1, wherein the pre-defined range of internet protocol multimedia private identity is denoted by an expression.

3. The method according to claim 1, wherein the pre-defined range of internet protocol multimedia private identity is denoted by a wild-carded internet protocol multimedia private identity or a template.

4. The method according to any preceding claim, further comprising associating the temporary internet protocol multimedia private identity and the temporary profile with the first internet protocol multimedia public identity.

5. A home subscriber server (30, 11) comprising
a transceiving means (603) for communicating with at least another apparatus,
a memory (602) for storing computer program code, and
a processing means (601) for causing the home subscriber server (30, 11) to perform:
receiving provisioning from a provisioning server (15), wherein said provisioning comprising at least an internet protocol multimedia public identity and a pre-defined range of internet protocol multimedia private identity associated with the internet protocol multimedia public identity, wherein an explicit amount of the internet protocol multimedia private identity within the pre-defined range is not provisioned, receiving a request comprising a first internet protocol multimedia public identity and its associated internet protocol multimedia private identity from an interrogating/serving-call session control function (13),
determining the first internet protocol multimedia public identity already provisioned and corresponding to a user that already exists in the home subscriber server (30, 11),
determining the received internet protocol multimedia private identity is not identical to any internet protocol multimedia private identity already exists in the home subscriber server (30, 11),
determining the received internet protocol multimedia private identity is not identical to any internet protocol multimedia private identity in a temporary profile, determining the received internet protocol multimedia private identity is within a pre-defined range of internet protocol multimedia private identity associated with the first internet protocol multimedia public identity,
creating a temporary internet protocol multimedia private identity identical to the received internet protocol multimedia private identity and a temporary profile for the received internet protocol multimedia private identity.

6. The home subscriber server (30, 11) according to claim 5, wherein the pre-defined range of internet protocol multimedia private identity is denoted by an expression.

7. The home subscriber server (30, 11) according to claim 5, wherein the pre-defined range of internet protocol multimedia private identity is denoted by a wild-carded internet protocol multimedia private identity or a template.

8. The home subscriber server (30, 11) according to any preceding claim 5-7, wherein the processing means (601) causing the home subscriber server (30, 11) to associate the temporary internet protocol multimedia private identity and the temporary profile with the first internet protocol multimedia public identity.

9. A computer program product comprising computer-executable computer program code which, when the computer program code is executed on a computer, is configured to cause the computer to carry out the method according to any one of claims 1 to 4.

10. The computer program product according to claim 9, wherein the computer program product comprises a computer-readable medium on which the computer-executable computer program code is stored, and/or wherein the program is directly loadable into an internal memory of a processor.

## Patentansprüche

1. Verfahren für einen Heimat-Teilnehmerserver (11, 30), umfassend:
Empfangen von Bereitstellung von einem Bereitstellungsserver (15), wobei die Bereitstellung mindestens eine öffentliche Internetprotokoll-Multimedia-Identität und einen vordefinierten Bereich von privater Internetprotokoll-Multimedia-Identität umfasst, der mit der öffentlichen Internetprotokoll-Multimedia-Identität assoziiert ist, wobei eine explizite Menge der privaten Internetprotokoll-Multimedia-Identität innerhalb des vordefinierten Bereichs nicht bereitgestellt wird,
Empfangen einer Anforderung, die eine erste öffentliche Internetprotokoll-Multimedia-Identität und ihre assoziierte private Internetprotokoll-Multimedia-Identität umfasst, von einer abfragenden/versorgenden Rufsitzungssteuerfunktion (13),
Bestimmen, dass die erste öffentliche Internetprotokoll-Multimedia-Identität im Heimat-Teilnehmerserver (11, 30) bereits vorhanden ist,
Bestimmen, dass die empfangene private Internetprotokoll-Multimedia-Identität mit keiner privaten Internetprotokoll-Multimedia-Identität identisch ist, die bereits bereitgestellt wurde und einem Benutzer entspricht, der im Heimat-Teilnehmerserver (11, 30) bereits vorhanden ist,
Bestimmen, dass die empfangene private Internetprotokoll-Multimedia-Identität mit keiner privaten Internetprotokoll-Multimedia-Identität in einem temporären Profil identisch ist,
Bestimmen, dass die empfangene private Internetprotokoll-Multimedia-Identität innerhalb eines vordefinierten Bereichs von privater Internetprotokoll-Multimedia-Identität ist, der mit der ersten öffentlichen Internetprotokoll-Multimedia-Identität assoziiert ist,
Erstellen einer temporären privaten Internetprotokoll-Multimedia-Identität, die mit der empfangenen privaten Internetprotokoll-Multimedia-Identität identisch ist, und eines temporären Profils für die empfangene private Internetprotokoll-Multimedia-Identität.

2. Verfahren nach Anspruch 1, wobei der vordefinierte Bereich von privater Internetprotokoll-Multimedia-Identität durch einen Ausdruck gekennzeichnet wird.

3. Verfahren nach Anspruch 1, wobei der vordefinierte Bereich von privater Internetprotokoll-Multimedia-Identität durch eine private Internetprotokoll-Multimedia-Identität mit Platzhaltern oder eine Vorlage gekennzeichnet wird.

4. Verfahren nach einem der vorhergehenden Ansprüche, ferner umfassend ein Assoziieren der temporären privaten Internetprotokoll-Multimedia-Identität und des temporären Profils mit der ersten öffentlichen Internetprotokoll-Multimedia-Identität.

5. Heimat-Teilnehmerserver (30, 11), umfassend:
ein Sendeempfangsmittel (603) zum Kommunizieren mit mindestens einer anderen Vorrichtung,
einen Speicher (602) zum Speichern von Programmcode und
ein Verarbeitungsmittel (601) zum Veranlassen des Heimat-Teilnehmerservers (30, 11) zum Durchführen von Folgendem:
Empfangen von Bereitstellung von einem Bereitstellungsserver (15), wobei die Bereitstellung mindestens eine öffentliche Internetprotokoll-Multimedia-Identität und einen vordefinierten Bereich von privater Internetprotokoll-Multimedia-Identität umfasst, der mit der öffentlichen Internetprotokoll-Multimedia-Identität assoziiert ist, wobei eine explizite Menge der privaten Internetprotokoll-Multimedia-Identität innerhalb des vordefinierten Bereichs nicht bereitgestellt wird,
Empfangen einer Anforderung, die eine erste öffentliche Internetprotokoll-Multimedia-Identität und ihre assoziierte private Internetprotokoll-Multimedia-Identität umfasst, von einer abfragenden/versorgenden Rufsitzungssteuerfunktion (13),
Bestimmen, dass die erste öffentliche Internetprotokoll-Multimedia-Identität bereits bereitgestellt wurde und einem Benutzer entspricht, der im Heimat-Teilnehmerserver (30, 11) bereits vorhanden ist,
Bestimmen, dass die empfangene private Internetprotokoll-Multimedia-Identität mit keiner privaten Internetprotokoll-Multimedia-Identität identisch ist, die im Heimat-Teilnehmerserver (30, 11) bereits vorhanden ist,
Bestimmen, dass die empfangene private Internetprotokoll-Multimedia-Identität mit keiner privaten Internetprotokoll-Multimedia-Identität in einem temporären Profil identisch ist,
Bestimmen, dass die empfangene private Internetprotokoll-Multimedia-Identität innerhalb eines vordefinierten Bereichs von privater Internetprotokoll-Multimedia-Identität ist, der mit der ersten öffentlichen Internetprotokoll-Multimedia-Identität assoziiert ist,
Erstellen einer temporären privaten Internetprotokoll-Multimedia-Identität, die mit der empfangenen privaten Internetprotokoll-Multimedia-Identität identisch ist, und eines temporären Profils für die empfangene private Internetprotokoll-Multimedia-Identität.

6. Heimat-Teilnehmerserver (30, 11) nach Anspruch 5, wobei der vordefinierte Bereich von privater Internetprotokoll-Multimedia-Identität durch einen Ausdruck gekennzeichnet ist.

7. Heimat-Teilnehmerserver (30, 11) nach Anspruch 5, wobei der vordefinierte Bereich von privater Internetprotokoll-Multimedia-Identität durch eine private Internetprotokoll-Multimedia-Identität mit Platzhaltern oder eine Vorlage gekennzeichnet ist.

8. Heimat-Teilnehmerserver (30, 11) nach einem der Ansprüche 5 bis 7, wobei das Verarbeitungsmittel (601) den Heimat-Teilnehmerserver (30, 11) zum Assoziieren der temporären privaten Internetprotokoll-Multimedia-Identität und des temporären Profils mit der ersten öffentlichen Internetprotokoll-Multimedia-Identität veranlasst.

9. Computerprogrammprodukt, umfassend computerausführbaren Computerprogrammcode, der so konfiguriert ist, dass er bei Ausführung des Computerprogrammcodes auf einem Computer den Computer zum Durchführen des Verfahrens nach einem der Ansprüche 1 bis 4 veranlasst.

10. Computerprogrammprodukt nach Anspruch 9, wobei das Computerprogrammprodukt ein computerlesbares Medium umfasst, auf dem der computerausführbare Computerprogrammcode gespeichert ist, und/oder wobei das Programm direkt in einen internen Speicher eines Prozessors geladen werden kann.

## Revendications

1. Procédé destiné à un serveur d'abonné domestique (11, 30) comprenant :
la réception d'un approvisionnement provenant d'un serveur d'approvisionnement (15), dans lequel ledit approvisionnement comprend au moins une identité publique multimédia de protocole Internet et une plage prédéfinie d'identités privées multimédia de protocole Internet associées à l'identité publique multimédia de protocole Internet, dans lequel une quantité explicite de l'identité privée multimédia de protocole Internet dans la plage prédéfinie n'est pas provisionnée,
la réception d'une requête comprenant une première identité publique multimédia de protocole Internet et son identité privée multimédia de protocole Internet associée provenant d'une fonction de commande de session d'appel d'interrogation/de service (13),
la détermination que la première identité publique multimédia de protocole Internet existe déjà dans le serveur d'abonné domestique (11, 30),
la détermination que l'identité privée multimédia de protocole Internet reçue n'est pas identique à une quelconque identité privée multimédia de protocole Internet déjà approvisionnée et correspondant à un utilisateur qui existe déjà dans le serveur d'abonné domestique (11, 30),
la détermination que l'identité privée multimédia de protocole Internet reçue n'est pas identique à une quelconque identité privée multimédia de protocole Internet dans un profil temporaire,
la détermination que l'identité privée multimédia de protocole Internet reçue se trouve dans une plage prédéfinie d'une identité privée multimédia de protocole Internet associée à la première identité publique multimédia de protocole Internet,
la création d'une identité privée multimédia de protocole Internet temporaire identique à l'identité privée multimédia de protocole Internet reçue et d'un profil temporaire pour l'identité privée multimédia de protocole Internet reçue.

2. Procédé selon la revendication 1, dans lequel la plage prédéfinie d'une identité privée multimédia de protocole Internet est indiquée par une expression.

3. Procédé selon la revendication 1, dans lequel la plage prédéfinie de l'identité privée multimédia de protocole Internet est indiquée par une identité privée multimédia de protocole Internet de remplacement ou un modèle.

4. Procédé selon l'une quelconque des revendications précédentes, comprenant en outre l'association de l'identité privée multimédia de protocole Internet temporaire et du profil temporaire à la première identité publique multimédia de protocole Internet.

5. Serveur d'abonné domestique (30, 11) comprenant :
un moyen d'émission-réception (603) permettant de communiquer avec au moins un autre appareil,
une mémoire (602) permettant de stocker un code de programme informatique, et
un moyen de traitement (601) permettant d'amener le serveur d'abonné domestique (30, 11) à exécuter :
la réception d'un approvisionnement provenant d'un serveur d'approvisionnement (15), dans lequel ledit approvisionnement comprend au moins une identité publique multimédia de protocole Internet et une plage prédéfinie d'identités privées multimédia de protocole Internet associées à l'identité publique multimédia de protocole Internet, dans lequel une quantité explicite de l'identité privée multimédia de protocole Internet dans la plage prédéfinie n'est pas provisionnée,
la réception d'une requête comprenant une première identité publique multimédia de protocole Internet et son identité privée multimédia de protocole Internet associée provenant d'une fonction de commande de session d'appel d'interrogation/de service (13),
la détermination que la première identité publique multimédia de protocole Internet est déjà approvisionnée et correspond à un utilisateur qui existe déjà dans le serveur d'abonné domestique (30, 11),
la détermination que l'identité privée multimédia de protocole Internet reçue n'est pas identique à une quelconque identité privée multimédia de protocole Internet qui existe déjà dans le serveur d'abonné domestique (30, 11),
la détermination que l'identité privée multimédia de protocole Internet reçue n'est pas identique à une quelconque identité privée multimédia de protocole Internet dans un profil temporaire,
la détermination que l'identité privée multimédia de protocole Internet reçue se trouve dans une plage prédéfinie d'une identité privée multimédia de protocole Internet associée à la première identité publique multimédia de protocole Internet,
la création d'une identité privée multimédia de protocole Internet temporaire identique à l'identité privée multimédia de protocole Internet reçue et d'un profil temporaire pour l'identité privée multimédia de protocole Internet reçue.

6. Serveur d'abonné domestique (30, 11) selon la revendication 5, dans lequel la plage prédéfinie d'identités privées multimédia de protocole Internet est indiquée par une expression.

7. Serveur d'abonné domestique (30, 11) selon la revendication 5, dans lequel la plage prédéfinie d'identités privées multimédia de protocole Internet est indiquée par une identité privée multimédia de protocole Internet de remplacement ou un modèle.

8. Serveur d'abonné domestique (30, 11) selon l'une quelconque des revendications 5 à 7 précédentes, dans lequel le moyen de traitement (601) amène le serveur d'abonné domestique (30, 11) à associer l'identité privée multimédia de protocole Internet temporaire et le profil temporaire à la première identité publique multimédia de protocole Internet.

9. Produit de programme informatique comprenant un code de programme informatique exécutable par ordinateur qui, lorsque le code de programme informatique est exécuté sur un ordinateur, est configuré pour amener l'ordinateur à mettre en œuvre le procédé selon l'une quelconque des revendications 1 à 4.

10. Produit de programme informatique selon la revendication 9, dans lequel le produit de programme informatique comprend un support lisible par ordinateur sur lequel le code de programme informatique exécutable par ordinateur est stocké, et/ou dans lequel le programme peut être chargé directement dans une mémoire interne d'un processeur.
